# EUROPÄISCHE PATENTANMELDUNG

(11) **EP 0 987 455 A2**
(43) Veröffentlichungstag der Anmeldung: **22.03.2000**
(21) Anmeldenummer: 99106293.6
(22) Anmeldetag: 16.04.1999
(51) Int. Cl.: F16C 3/12

(54) **Triebstrang für ein Antriebsaggregat**

(30) Priorität: 05.09.1998 DE 19840662
(71) Anmelder: Volkswagen Aktiengesellschaft, 38436 Wolfsburg (DE)
(72) Erfinder: Lagies, Dietmar, Dipl.-Ing., 38448 Wolfsburg (DE); Becker, Ulrich, 38444 Wolfsburg (DE)

(57) **Zusammenfassung**

Die vorliegende Erfindung betrifft einen Triebstrang für ein Antriebsaggregat, insbesondere für eine Brennkraftmaschine, insbesondere eines Kraftfahrzeuges, mit einer geteilten Kurbelwelle mit zwei Kurbelwellenhälften (10,12), wobei zwischen den zwei Kurbelwellenhälften (10,12) ein Kurbelwellenverbindungsteil (13) angeordnet ist. Hierbei umfassen die beiden Kurbelwellenhälften (10,12) kurbelwellenverbindungsteilseitig je einen Zapfen (22) mit auf dessen Umfang ausgebildeter erster Festsitzsteckverzahnung (24). Ferner umfaßt das Kurbelwellenverbindungsteil (13) eine Buchse (26) mit auf deren inneren Umfang ausgebildeter zweiter Festsitzsteckverzahnung (28), wobei erste und zweite Festsitzsteckverzahnung (24,28) ineinander passend ausgebildet sind.

## Beschreibung

Die Erfindung betrifft einen Triebstrang für ein Antriebsaggregat, insbesondere für eine Brennkraftmaschine, insbesondere eines Kraftfahrzeuges, mit einer geteilten Kurbelwelle mit zwei Kurbelwellenhälften, wobei zwischen den zwei Kurbelwellenhälften ein Kurbelwellenverbindungsteil angeordnet ist, gemäß dem Oberbegriff des Anspruchs 1.

Aus der DE 42 42 140 A1 ist eine Kurbelwelle für Verbrennungsmotoren bekannt, welche aus einzelnen Teilen zusammensteckbar ist. Hierbei weisen die einzelnen Teile Keilmuffen und dazu passende Keilwellenstümpfe auf welche ineinander steckbar ausgebildet sind. Die Sicherung der Steckverbindung erfolgt mittels eines in einer durch die jeweilige Keilmuffe und Keilwellenstumpf befindlichen Bohrung geführten Spannstiftes, welcher sich radial durch Keilwellenstumpf und Keilmuffe erstreckt.

Aus dem Artikel "The Coventry Climax Racing Engine 1960 - 1965" von Walter T.F. Hassan in SAE-Paper 660742, 1966, Seiten 239 bis 265 ist eine zweigeteilte Kurbelwelle mit einem mittigen Zahnrad mit an diesem beidseitig angeordneten Zapfen bekannt, auf welche entsprechende Aufnahmen an den beiden Hälften der Kurbelwelle in der Art eines Preßsitzes aufsteckbar sind. Hierzu wird in den Aufnahmen ein Öldruck erzeugt, welche die Aufnahmen in ihrem Umfang derart ausdehnt, daß diese auf den jeweiligen Zapfen des Zahnrades aufsteckbar sind. Dies hat jedoch den Nachteil, daß zur Montage ein hoher Aufwand erforderlich ist, da Öldrücke von 15.600 psi (∼108 Pa) und entsprechende Klammervorrichtungen zum Zusammenfügen der Kurbelwellenhälften bei Aufrechterhalten des vorgenannten Druckes erforderlich sind.

In dem Artikel "Wälzlager in Verbrennungskraftmaschinen" von Dr.-Ing. W. Hampp in MTZ, Jahrgang 19, Nr. 9, September 1958, Seiten 315 bis 319, ist auf Seite 316 eine geteilte Kurbelwelle beschrieben, wobei einer Verbindung der Wellenteile durch eine selbstzentrierende Plan-Kerbverzahnung und mittels Differenzgewindebolzen erfolgt. Diese Anordnung ist jedoch aufwendig und kostenintensiv.

Aus der US 1 024 817 ist eine aus Teilen zusammengesetzte Kurbelwelle bekannt, wobei Pleuellager in gegenüberliegende Kurbelwangen mittels einer Nut-Steg-Verbindung eingreifen. Eine derartige azentrische Verbindung der Kurbelwellenteile bedingt jedoch mechanische Schwachstellen. so daß eine derartige Kurbelwelle nur begrenzt belastbar ist und ggf. eine geringere Lebensdauer aufweist.

Eine der vorgenannten ähnliche Anordnung beschreibt die US 2 151 624, wobei zwei Kurbelwellenteile im Bereich zweier gegenüberliegender Kurbelarme über einen Bolzen verbunden sind, welcher mittels Längsstegen in Nuten der Teile eingreift. Zur Erhöhung der Stabilität dieser Verbindung ist zusätzlich ein weiterer Schraubbolzen vorgesehen, welcher koaxial zum Bolzen verläuft. Diese Anordnung ist Aufwendig und hat ferner die vorgenannten Nachteile einer azentrischen Verbindung. Der Bolzen und der Schraubbolzen sind durch die Lage in einem geteilten Pleuellager starken Biegebelastungen ausgesetzt.

Der vorliegenden Erfindung liegt daher die Aufgabe zugrunde, einen Triebstrang der obengenannten Art dahingehend zu verbessern, daß eine einfache Montage des Triebstranges bei gleichzeitig hoher Festigkeit und hohem Drehmomentaufnahmevermögen erzielt wird.

Diese Aufgabe wird erfindungsgemäß durch einen Triebstrang der o.g. Art mit den in Anspruch 1 gekennzeichneten Merkmalen gelöst. Vorteilhafte Ausgestaltungen der Erfindung sind in den abhängigen Ansprüchen angegeben.

Dazu ist es erfindungsgemäß vorgesehen, daß die beiden Kurbelwellenhälften kurbelwellenverbindungsteilseitig je einen Zapfen mit auf dessen Umfang ausgebildeter erster Festsitzsteckverzahnung umfassen, und daß das Kurbelwellenverbindungsteil eine Buchse mit auf deren inneren Umfang ausgebildeter zweiter Festsitzsteckverzahnung umfaßt, wobei erste und zweite Festsitzsteckverzahnung ineinander passend ausgebildet sind.

Dies hat den Vorteil, daß ein Triebstrang mit einfach durch zusammensteckenmontierbarer, geteilter Kurbelwelle zur Verfügung steht, wobei gleichzeitig durch die ineinandergreifenden Festsitzsteckverzahnungen eine hohe Festigkeit der Verbindung der beiden Kurbeiwellenhälften bei guter Drehmomentübertragung und hohem Lastaufnahmevermögen erzielt ist.

Zum Weiterleiten eines von dem Antriebsaggregat erzeugten Drehmomentes beispielsweise an ein Getriebe ist in besonders vorteilhafter Weise eine geteilte Abtriebswelle vorgesehen, mit zwei Abtriebswellenhälften, wobei zwischen den zwei Abtriebswellenhälften ein Abtriebswellenverbindungsteil angeordnet ist, welches mit dem Kurbelwellenverbindungsteil in kraftübertragender Verbindung steht.

Für eine feste und einfache Verbindung der beiden Abtriebswellenhälften umfaßt wenigstens eine der beiden Abtriebswellenhälften einen Zapfen mit auf dessen Umfang ausgebildeter dritter Festsitzsteckverzahnung und das Abtriebswellenverbindungsteil eine Buchse mit auf deren inneren Umfang ausgebildeter vierter Festsitzsteckverzahnung, wobei dritte und vierte Festsitzsteckverzahnungen ineinander passend ausgebildet sind. Zweckmäßigerweise ist hierbei die dritte Festsitzsteckverzahnung wenigstens einer Abtriebswellenhälfte und die zugehörige vierte Festsitzsteckverzahnung mit einer Schrägung von insbesondere 15 Minuten ausgebildet.

Zum festen axialen Verschrauben der Abtriebswellenhälften miteinander weist wenigstens eine der beiden Abtriebswellenhälften einen diese durchsetzenden Zuganker auf, welcher an einem aus der Abtriebswellenhälfte abtriebswellenverbindungsteilseitig herausragenden Ende ein Gewinde aufweist, wobei in der entsprechend anderen Abtriebswellenhälfte eine Gewindebohrung zum Eingriff des Gewindes des Zugankers vorgesehen ist.

Zweckmäßigerweise weist wenigstens eine der beiden Abtriebswellenhälften ein Zahnrad zum Antrieb eines Nebenaggregats, insbesondere zum Antrieb einer Ölpumpe, auf.

Als zusätzliche Sicherheit für einen axialen Zusammenhalt der Kurbelwellenhälften ist ein Differenzgewindebolzen vorgesehen mit an jeweiligen Enden gegensinnig ausgebildeten Gewinden, wobei ferner kurbelwellenverbindungsteilseitig in jeder Kurbelwellenhälfte ein entsprechendes Gewinde zum Eingriff des jeweiligen Gewindes des Differenzgewindebolzens vorgesehen ist.

In einer besonders bevorzugten Ausführungsform durchgreift der Differenzgewindebolzen an einer Seite eine Kurbeiwange einer Kurbelwellenhälfte, wobei kurbelwangenseitig ein mit einem Kegelsitz versehenes Gewindestück auf den Differenzgewindebolzen aufschraubbar vorgesehen ist.

Zweckmäßigerweise ist das Kurbelwellenverbindungsteil ein Abtriebszahnrad und das Abtriebswellenverbindungsteil ein mit dem Abtriebszahnrad in Eingriff stehendes Zahnrad.

Einen erhöhten Halt zwischen den Kurbelwellenhälften erzielt man dadurch, daß die erste und/oder zweite Festsitzsteckverzahnung mit einer Schrägung von insbesondere 15 Minuten ausgebildet ist, wobei optional die Schrägungen der jeweiligen ersten Festsitzsteckverzahnung der Kurbelwellenhälften gegensinnig zueinander ausgebildet sind. Die letztere bevorzugte Ausführungsform mit gegenläufig abgeschrägter Festsitzsteckverzahnung der Kurbelwellenhälften vermeidet ferner schädliche Relativverdrehungen zwischen den beiden Kurbelwellenhälften während des Einsteckens dieser in das Kurbelwellenverbindungsteil.

Weitere Merkmale, Vorteile und vorteilhafte Ausgestaltungen der Erfindung ergeben sich aus den abhängigen Ansprüchen, sowie aus der nachstehenden Beschreibung der Erfindung anhand der beigefügten Zeichnungen. Diese zeigen in
- Fig. 1: eine bevorzugte Ausführungsform eines erfindungsgemäßen Triebstranges in Explosionsdarstellung und
- Fig. 2: in teilweise aufgebrochener Aufsicht in montiertem Zustand.

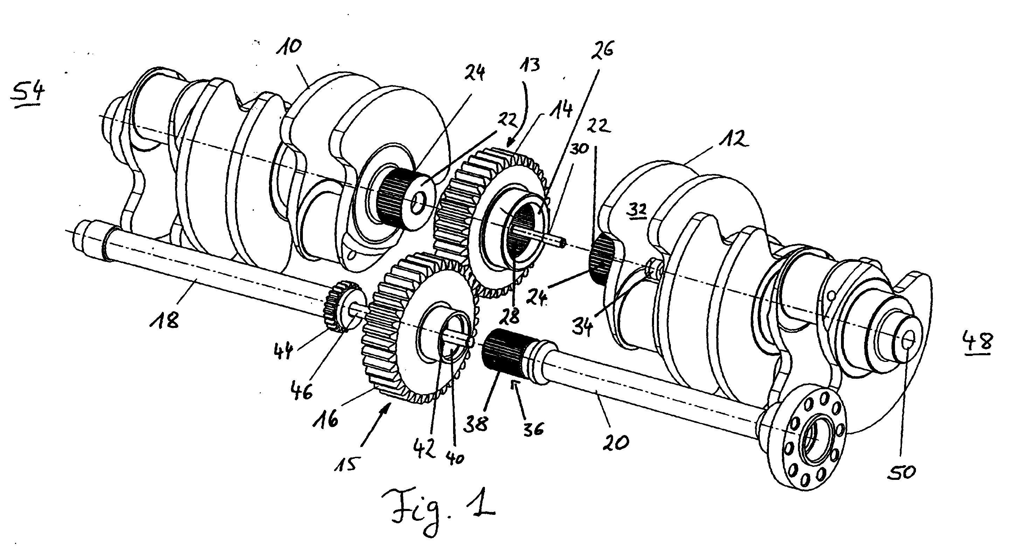

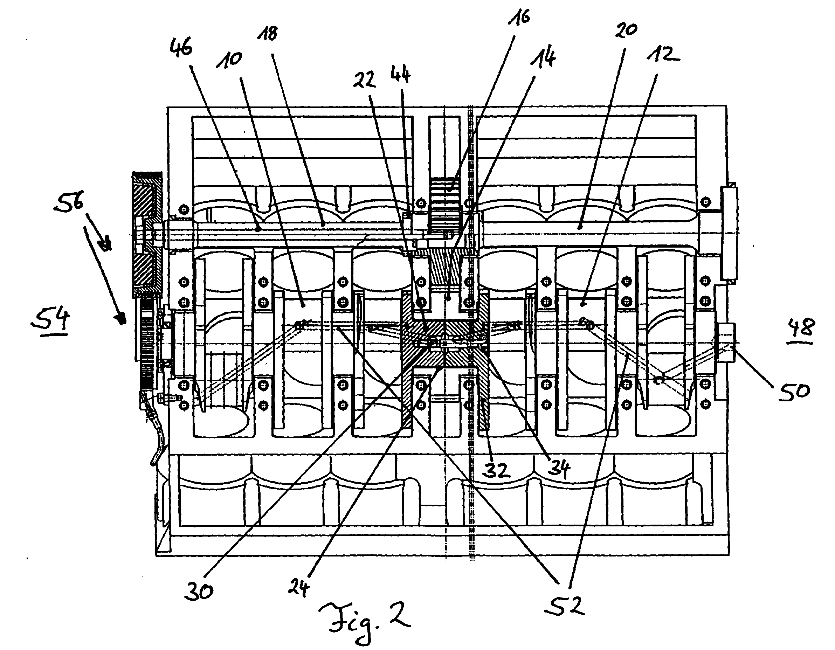

Die in den Fig. 1 und 2 dargestellte bevorzugte Ausführungsform eineserfindungsgemäßen Triebstranges umfaßt eine riemenseitige Kurbelwellenhälfte 10, eine getriebeseitige Kurbelwellenhälfte 12 sowie ein zwischen diesen Kurbelwellenhälften 10, 12 angeordnetes Kurbelwellenverbindungsteil 13, welches in der dargestellten Ausführungsform als Abtriebszahnrad 14 ausgebildet ist und mit einem Abtriebswellenverbindungsteil 15 kämmt, welches zwischen einer riemenseitigen Abtriebswellenhälfte 18 und einer getriebeseitigen Abtriebswellenhälfte 20 in Form eines Zahnrades 16 angeordnet ist.

Jede Kurbelwellenhälfte 10, 12 weist kurbelwellenverbindungsteilseitig einen Zapfen 22 auf, welche auf ihren jeweiligen äußeren Umfangsflächen mit einer Festsitzsteckverzahnung 24 versehen sind. In dem Abtriebszahnrad 14 ist eine Buchse 26 ausgebildet, welche an deren innerer Umfangsfläche eine entsprechende zweite Festsitzsteckverzahnung 28 trägt, wobei die zweite Festsitzsteckverzahnung 28 derart ausgebildet ist, daß die erste Festsitzsteckverzahnung 24 der beiden Kurbelwellenhälften 10, 12 in erstem einsteckbar ist. Die in das Abtriebszahnrad 14 eingesteckten Kurbelwellenhälften 10, 12 bilden die vollständige Kurbelwelle aus. Alternativ ist es auch möglich, die Kurbelwellenhälften 10, 12 wiederum in weitere Kurbelwellenhälften zu unterteilen oder die Kurbelwelle anders als hälftig zu teilen.

Die ersten Festsitzsteckverzahnungen 24 der beiden Kurbelwellenhälften 10, 12 sind bevorzugt mit einer leichten Schrägung von beispielsweise 15 Minuten versehen, wobei es besonders vorteilhaft ist, wenn die Schrägung der beiden ersten Festsitzsteckverzahnungen 24 der jeweiligen Kurbelwellenhälften gegenläufig zueinander ausgebildet sind. Dies verhindert beim Einstecken der Kurbelwellenhälften 10, 12 in das Abtriebszahnrad 14 eine unerwünschte Relativdrehung der Kurbelwellenhälften 10, 12 gegeneinander.

Für einen zusätzlichen axialen Verbund der beiden Kurbelwellenhälften 10, 12 ist zusätzlich ein Differenzgewindebolzen 30 vorgesehen, welcher an einem Ende beispielsweise ein Rechtsgewinde und an einem gegenüberliegenden Ende beispielsweise ein Linksgewinde aufweist und das Abtriebszahnrad 14 durchgreifend in die beiden Kurbelwellenhälften 10, 12 einschraubbar ist. Dieser Differenzgewindebolzen 30 dient als zusätzliche Sicherungsmaßnahme für den axialen Zusammenhalt des Bauverbundes und trägt im Betrieb keinerlei Axiallasten. Das in den Figuren rechte Ende des Differenzgewindebolzens 30 durchgreift eine Kurbelwange 32 der getriebeseitigen Kurbelwellenhälfte 12, wobei auf das durchgesteckte rechte Ende des Differenzgewindebolzens 30 ein mit einem Kegelsitz versehenes Gewindestück 34 aufschraubbar ist. Durch dieses Gewindestück 34 kann ein nicht dargestelltes Spezialwerkzeug in einen nicht näher dargestellten Inneneingriff des Differenzgewindebolzens 30 eingreifen, um den Differenzgewindebolzen 30 fest zu verspannen.

Die getriebeseitige Abtriebswellenhälfte 20 weist abtriebswellenverbindungsteilseitig einen Zapfen 36 auf, welcher an dessen Umfangsfläche mit einer dritten Festsitzsteckverzahnung 38 versehen ist. In dem Abtriebswellenverbindungsteil bzw. Zahnrad 16 ist analog zum Abtriebszahnrad 14 eine Buchse 40 mit einer vierten Festsitzsteckverzahnung 42 an deren inneren Umfang vorgesehen. Zweckmäßigerweise sind die dritte und/oder vierte Festsitzsteckverzahnung 38 und 42 mit einer Schrägung von beispielsweise 15 Minuten zum Erzielen eines festen Sitzes versehen.

An der riemenseitigen Abtriebswellenhälfte 18 ist ein Zahnrad 44 zum Antrieb eines Nebenaggregats, beispielsweise einer Ölpumpe, angeordnet. Ferner durchgreift eine Zugankerschraube 46 die riemenseitige Abtriebswellenhälfte 18 sowie das Zahnrad 16 und ist in die getriebeseitige Abtriebswellenhälfte 20 einschraubbar, um einen axialen Verbund zwischen den Abtriebswellenhälften 18 und 20 herzustellen. Alternativ ist auch die Abtriebswellenhälften 18, 20 je nach Bedarf wiederum in mehrere Hälften oder anders unterteilbar.

Die Kurbelwelle 10, 12 weist an einem getriebeseitigen Ende 48 eine Öffnung 50 für eine Ölversorgung auf, welche über entsprechende Versorgungskanäle 52, wie insbesondere aus Fig. 2 ersichtlich, Wälzlager der Kurbelwelle 10, 12 mit Öl versorgt. An einemriemenseitigen Ende 54 sind, wie insbesondere aus Fig. 2 ersichtlich, entsprechende Bauteile 56 eines Riementriebes an der riemenseitigen Kurbelwellenhälfte 10 und der riemenseitigen Abtriebswellenhälfte 18 vorgesehen.

## Patentansprüche

1. Triebstrang für ein Antriebsaggregat, insbesondere für eine Brennkraftmaschine, insbesondere eines Kraftfahrzeuges, mit einer geteilten Kurbelwelle mit zwei Kurbelwellenhälften (10,12), wobei zwischen den zwei Kurbelwellenhälften (10,12) ein Kurbelwellenverbindungsteil (13) angeordnet ist,
dadurch gekennzeichnet,
daß die beiden Kurbelwellenhälften (10,12) kurbelwellenverbindungsteilseitig je einen Zapfen (22) mit auf dessen Umfang ausgebildeter erster Festsitzsteckverzahnung (24) umfassen, und daß das Kurbelwellenverbindungsteil (13) eine Buchse (26) mit auf deren inneren Umfang ausgebildeter zweiter Festsitzsteckverzahnung (28) umfaßt, wobei erste und zweite Festsitzsteckverzahnung (24,28) ineinander passend ausgebildet sind.

2. Triebstrang nach Anspruch 1,
dadurch gekennzeichnet, daß
eine geteilte Abtriebswelle vorgesehen ist, mit zwei Abtriebswellenhälften (18,20), wobei zwischen den zwei Abtriebswellenhälften (18,20) ein Abtriebswellenverbindungsteil (15) angeordnet ist, welches mit dem Kurbelwellenverbindungsteil (14) in kraftübertragender Verbindung steht.

3. Triebstrang nach Anspruch 2,
dadurch gekennzeichnet, daß
wenigstens eine der beiden Abtriebswellenhälften (18,20) einen Zapfen (36) mit auf dessen Umfang ausgebildeter dritter Festsitzsteckverzahnung (38) und das Abtriebswellenverbindungsteil (15) eine Buchse (40) mit auf deren inneren Umfang ausgebildeter vierter Festsitzsteckverzahnung (42) umfaßt, wobei dritte und vierte Festsitzsteckverzahnung (38,42) ineinander passend ausgebildet sind.

4. Triebstrang nach Anspruch 3,
dadurch gekennzeichnet, daß
die dritte Festsitzsteckverzahnung (38) wenigstens einer Abtriebswellenhälfte (18,20) und/oder die zugehörige vierte Festsitzsteckverzahnung (42) mit einer Schrägung von insbesondere 15 Minuten ausgebildet ist.

5. Triebstrang nach einem der Ansprüche 2 bis 4,
dadurch gekennzeichnet, daß
wenigstens eine der beiden Abtriebswellenhälften (18,20) einen diese durchsetzenden Zuganker (46) aufweist, welcher an einem aus der Abtriebswellenhälfte (18,20) abtriebswellenverbindungsteilseitig herausragenden Ende ein Gewinde aufweist, wobei in der entsprechend anderen Abtriebswellenhälfte (18,20) ein Gewinde zum Eingriff des Gewindes des Zugankers (46) vorgesehen ist.

6. Triebstrang nach einem der Ansprüche 2 bis 5,
dadurch gekennzeichnet, daß
wenigstens eine der beiden Abtriebswellenhälften (18,20) ein Zahnrad (44) zum Antrieb eines Nebenaggregats, insbesondere zum Antrieb einer Ölpumpe, aufweist.

7. Triebstrang nach einem der vorhergehenden Ansprüche,
dadurch gekennzeichnet, daß
ein Differenzgewindebolzen (30) vorgesehen ist mit an jeweiligen Enden gegensinnig ausgebildeten Gewinden, wobei ferner kurbelwellenverbindungsteilseitig in jeder Kurbelweltenhälfte (10,12) ein entsprechendes Gewinde zum Eingriff des jeweiligen Gewindes des Differenzgewindebolzens (30) vorgesehen ist.

8. Triebstrang nach Anspruch 7,
dadurch gekennzeichnet, daß
der Differenzgewindebolzen (30) an einer Seite eine Kurbelwange (32) einer Kurbelwellenhälfte (12) durchgreift, wobei kurbelwangenseitig ein mit einem Kegelsitz versehenes Gewindestück (34) auf den Differenzgewindebolzen (30) aufschraubbar vorgesehen ist.

9. Triebstrang nach einem der vorhergehenden Ansprüche,
dadurch gekennzeichnet, daß
das Kurbelwellenverbindungsteil (13) ein Abtriebszahnrad (14) ist.

10. Triebstrang nach einem der vorhergehenden Ansprüche,
dadurch gekennzeichnet, daß
das Abtriebswellenverbindungsteil (15) ein Zahnrad (16) ist.

11. Triebstrang nach einem der vorhergehenden Ansprüche,
dadurch gekennzeichnet, daß
die erste und/oder zweite Festsitzsteckverzahnung (24,28) mit einer Schrägung von insbesondere 15 Minuten ausgebildet ist.

12. Triebstrang nach einem der vorhergehenden Ansprüche,
dadurch gekennzeichnet, daß
die Schrägungen der jeweiligen ersten Festsitzsteckverzahnung (24) der Kurbelwellenhälften (10,12) gegensinnig zueinander ausgebildet sind.
